Europäisches Patentamt

European Patent Office

Office européen des brevets

(19)

(11) Numéro de publication : **0 445 005 A2**

# (12) DEMANDE DE BREVET EUROPEEN

(21) Numéro de dépôt : 91400477.5

(22) Date de dépôt : 21.02.91

(51) Int. Cl.⁵ : **G01P 13/02, G01P 5/00**

(30) Priorité : 23.02.90 FR 9002271

(43) Date de publication de la demande :
04.09.91 Bulletin 91/36

(84) Etats contractants désignés :
**BE CH DE GB IT LI**

(71) Demandeur : **COMMISSARIAT A L'ENERGIE
ATOMIQUE**
**31-33, rue de la Fédération**
**F-75015 Paris (FR)**

(72) Inventeur : **Gouirand, Jean Marie**
**Chemin du Pigonnet, Rue du Claou**
**F-13770 Venelles (FR)**

(74) Mandataire : **Mongrédien, André et al**
**c/o BREVATOME 25, rue de Ponthieu**
**F-75008 Paris (FR)**

(54) **Bisonde optique orientable pour mesures diphasiques locales.**

(57)    Bisonde optique orientable pour la mesure dans un écoulement de direction quelconque dans une émulsion diphasique, comportant, montées dans un support cylindrique (4) obturant l'extrémité d'un tube cylindrique creux (2) de pénétration dans l'émulsion et mobile en rotation autour de son axe longitudinal (XY), deux fibres optiques d'observation (10,12), caractérisé en ce que le support cylindrique (4) est monté rotatif autour d'un axe transversal (18), lié au cylindre creux (2) et perpendiculaire à l'axe longitudinal (XY) de celui-ci et en ce qu'une tringlerie (20) liée au support cylindrique (4) et traversant le tube cylindrique creux (2) par une articulation 22 permet de commander, depuis l'entrée du tube, l'état de rotation du support cylindrique (4) autour de l'axe transversal (18).

# FIG. 2

EP 0 445 005 A2

# BISONDE OPTIQUE ORIENTABLE POUR MESURES DIPHASIQUES LOCALES

La présente invention se rapporte à la mesure dans des émulsions diphasiques, c'est-à-dire dans des milieux où se trouvent mêlées en proportions variables, une phase gazeuse et une phase liquide, et elle vise plus particulièrement l'observation et la détermination de la vitesse d'écoulement de cette émulsion diphasique dans une direction quelconque de l'espace.

De façon classique, on connaît au moins depuis 1971 des sondes optiques que l'on introduit dans le milieu diphasique à mesurer et dont le fonctionnement repose essentiellement sur la présence de fibres optiques dont l'extrémité est usinée de manière convenable pour permettre une bonne vision.

De telles fibres optiques fonctionnent de la façon suivante. Si l'on envoie de la lumière par l'intermédiaire d'une telle fibre, il y a réfraction de cette lumière dans le milieu si l'extrémité sensible de la fibre est entourée de liquide et au contraire, réflexion totale de cette lumière et par conséquent retour de celle-ci dans la même fibre, lorsque l'extrémité sensible est entourée de gaz ou de vapeur. Si par conséquent un retour de lumière réfléchie dans la fibre émettrice est détectée, c'est l'indication de l'existence d'une phase gazeuse autour de l'extrémité sensible de cette fibre.

Un tel dispositif connu permet par conséquent de savoir à chaque instant si en un point particulier d'un milieu on se trouve en phase liquide ou en phase gazeuse. Toutefois, une fibre seule est incapable de renseigner sur la direction et la vitesse d'un écoulement éventuel au sein de cette émulsion diphasique.

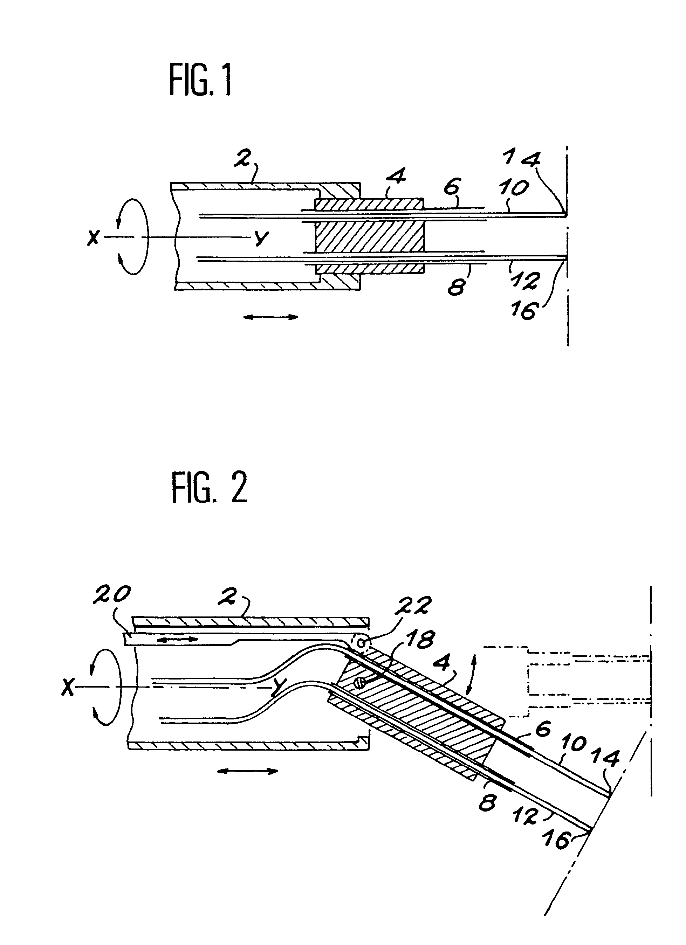

Pour résoudre ce problème, on a proposé de réaliser une sonde optique double ou bisonde comportant côté à côte deux fibres optiques parallèles comme le montre la figure 1. Une telle sonde optique comporte essentiellement un tube cylindrique creux 2 en un matériau rigide et destiné à pénétrer jusqu'au point de l'émulsion que l'on désire observer. Ce tube cylindrique creux 2 est obturé à son extrémité d'observation par un support cylindrique 4 comportant deux orifices dans lesquels sont montés des tubes de guidage 6 et 8 destinés au passage de deux fibres optiques 10 et 12 dont les extrémités 14 et 16 ont été convenablement usinées de façon à permettre l'observation optique correcte. L'ensemble du système, c'est-à-dire le tube cylindrique creux 2 est mobile en rotation autour de son axe longitudinal XY. On conçoit parfaitement qu'un tel appareil connu soit susceptible de détecter et même de mesurer une vitesse d'écoulement du milieu biphasique en observation dès lors que des particules liquides et/ou des bulles de gaz se déplaceraient en se présentant de façon successive dans le temps devant les extrémités 14 et 16 des fibres 10 et 12. En mesurant le temps de transit de tels phénomènes entre les deux extrémités 14 et 16 on peut facilement déduire la vitesse d'écoulement de l'émulsion diphasique en cet endroit avec une bonne précision.

On comprend néanmoins immédiatement que la bisonde optique de la figure 1 n'est capable de mesurer qu'un vecteur vitesse contenu dans un plan perpendiculaire à son axe XY. Ceci en limite par conséquent l'application de façon importante et nécessite plusieurs pénétrations successives de cette même bisonde selon deux directions différentes si l'on veut mettre en évidence et surtout mesurer la vitesse d'un écoulement dans une direction de l'espace qui ne soit pas perpendiculaire à l'axe XY.

La présente invention a précisément pour objet une bisonde optique orientable qui permet l'observation d'un écoulement de direction quelconque dans une émulsion diphasique à l'aide d'un moyen simple et efficace.

Cette bisonde optique et orientable pour l'observation d'un écoulement de direction quelconque dans une émulsion diphasique, comportant, montées dans un support cylindrique obturant l'extrémité d'un tube cylindrique creux de pénétration dans l'émulsion et mobile en rotation autour de son axe longitudinal, deux fibres optiques d'observation, se caractérise en ce que le support cylindrique est monté rotatif autour d'un axe transversal, lié au cylindre creux et perpendiculaire à l'axe longitudinal de celui-ci et en ce qu'une tringlerie, liée au support cylindrique et traversant le tube cylindrique creux permet de commander, depuis l'entrée du tube, l'état de rotation du support cylindrique autour de l'axe transversal.

En d'autres termes, l'invention a pour objet une bisonde optique dérivée de celle de l'art connu selon la figure 1, mais dans laquelle on a aménagé l'extrémité et notamment le support cylindrique 4 de l'art antérieur pour qu'il soit mobile autour d'un axe perpendiculaire à l'axe longitudinal XY du tube cylindrique creux et que son inclinaison par rapport à cet axe puisse être facilement commandée par l'observateur depuis l'extrémité de la bisonde optique située à l'extérieur du milieu diphasique en observation.

De toute façon, l'invention sera mieux comprise en se référant à la description qui suit de l'un de ses modes de réalisation, donné, à titre illustratif et non limitatif en se référant à la figure 2.

Sur cette figure 2, on retrouve, portant les mêmes nombres de référence que sur la figure 1, les principaux éléments d'une bisonde optique comportant deux fibres 10 et 12 montées parallèlement à une certaine distance l'une de l'autre.

L'originalité du mode de mise en oeuvre de l'invention décrit sur la figure 2, repose sur l'existence d'un axe 18 perpendiculaire à l'axe longitudinal XY de la bisonde et fixé sur les parois du tube cylindrique creux 2. Cet axe auquel est lié le support cylindrique 4 et autour duquel il peut tourner, permet, grâce à une tringlerie 20 articulée autour de l'axe 22 situé sur le support cylindrique 4 par une traction depuis l'extrémité d'observation extérieure de la bisonde, de faire basculer plus ou moins le support cylindrique 4 et d'orienter par conséquent le plan d'observation des vitesses d'écoulement dans l'émulsion diphasique en le faisant tourner autour de l'axe 18.

Comme par ailleurs, le tube cylindrique creux 2 est toujours monté mobile en rotation autour de son axe longitudinal XY, on voit que la combinaison de ces deux mouvements de rotation permet de placer les extrémités 14 et 16 des deux fibres optiques d'observation 10 et 12 et par conséquent la direction d'observation d'un écoulement dans toute direction de l'espace souhaitable.

L'avantage évident de la bisonde optique orientable objet de l'invention réside dans le fait qu'une seule pénétration dans le milieu à observer est nécessaire au lieu de deux pénétrations perpendiculaires utilisant deux bisondes optiques pour assurer la mesure d'une vitesse de déplacement de direction quelconque. Ceci est un gros avantage notamment dans le cas où deux pénétrations perpendiculaires ne sont pas toujours possibles lorsque la complexité des dispositifs dans lesquels ont lieu l'écoulement l'interdit.

Cette bisonde optique orientable peut être utilisée dans de nombreux cas de figures et permet d'identifier par exemple des phénomènes de remous, d'inversion de sens d'écoulement ou d'instabilité de débit. Elle peut également servir à effectuer, si on le souhaite, la mesure des trois composantes de la vitesse d'écoulement en un point déterminé, ce qui est également intéressant pour étudier certains écoulements biphasiques dans des structures ayant des formes complexes.

Cette bisonde optique orientable peut effectuer des mesures dans tout fluide biphasique isolant ou conducteur, (liquide gaz ou liquide vapeur) dont les vitesses sont par exemple inférieures ou égales à 15 m/s.

Dans une réalisation de la bisonde objet de l'invention, sa résistance mécanique est telle qu'elle peut supporter 50 bars à une température de 150°C. Seuls les milieux chimiquement agressifs sont à éviter s'ils sont de nature à provoquer une attaque chimique des fibres optiques.

## Revendications

1. Bisonde optique orientable pour l'observation d'un écoulement de direction quelconque dans une émulsion diphasique, comportant, montées dans un support cylindrique (4) obturant l'extrémité d'un tube cylindrique creux (2) de pénétration dans l'émulsion et mobile en rotation autour de son axe longitudinal (XY), deux fibres optiques d'observation (10,12), caractérisé en ce que le support cylindrique (4) est monte rotatif autour d'un axe transversal (18), lié au cylindre creux (2) et perpendiculaire à l'axe longitudinal (XY) de celui-ci et en ce qu'une tringlerie (20) liée au support cylindrique (4) et traversant le tube cylindrique creux (2) par une articulation 22 permet de commander, depuis l'entrée du tube, l'état de rotation du support cylindrique (4) autour de l'axe transversal (18).

# FIG. 1

# FIG. 2